# EUROPÄISCHE PATENTSCHRIFT

(11) **EP 0 446 419 B1**
(45) Veröffentlichungstag und Bekanntmachung des Hinweises auf die Patenterteilung: **21.09.1994**
(21) Anmeldenummer: 90120524.5
(22) Anmeldetag: 26.10.1990
(51) Int. Cl.: A01D 33/02, A01D 17/10

(54) **Kartoffelroder**
Potatoharvester
Récolteuse de pommes-de-terre

(30) Priorität: 31.10.1989 DE 8912870 U
(43) Veröffentlichungstag der Anmeldung: 18.09.1991
(73) Patentinhaber: MASCHINENFABRIK NIEWÖHNER GMBH & CO. KG, D-33335 Gütersloh (DE)
(72) Erfinder: Niewöhner, Bruno, W-33335 Gütersloh (DE)
(74) Vertreter: Weber, Joachim, Dr.

(56) Entgegenhaltungen:
- EP-A- 0 303 226
- DE-A- 3 631 969
- DE-C- 492 616
- DE-U- 8 810 272

## Beschreibung

Die Erfindung bezieht sich auf einen mehrreihigen Kartoffelroder, der als Schubroder (oder als Zugroder) mit einer Rodeeinrichtung mit mehreren nebeneinander angeordneten Krautketten ausgestattet ist, die endlose in Dreiecksform umlaufen und einen Kartoffelförderer umschließen, der endseitig mit Querfördereinrichtungen ausgestattet ist, nach dem Oberbegriff des Anspruchs 1. Ein solcher Kartoffelroder ist aus der DE-U- 8 810 272 bekannt.

Bei den bekannten mehrreihigen Kartoffelrodern besteht der Nachteil, daß die Kartoffeln zwar von dem gesondert mitlaufenden Kraut sich trennen lassen; hier sind aber besondere aufwendige Maßnahmen zu ergreifen, so daß der maschinelle Aufwand bisher zu groß ist, um die Separierung zu verbessern.

Soweit es bekannt ist, zwei nebeneinanderliegende Kettenbahnen als Krautketten V-förmig zueinander anzuordnen, so fallen die Kartoffeln in dem sich vergrößernden Zwischenraum zwischen diesen Kettenbahnen durch und werden von einem darunter endlos umlaufenden Kartoffelförderband auf Querförderbänder abgeleitet. Dabei läßt es sich nicht vermeiden, daß auch durch den V-förmigen Zwischenraum Kraut mit den Kartoffeln abgeworfen wird.

Weiterhin ist es bekannt, unterhalb des Obertrums mehrerer paralleler Krautketten zwei Quertransporteinrichtungen vorzusehen, die zwischen sich einen mittleren, die abgeworfenen Kartoffeln durchlassenden Zwischenraum aufweisen.

Die Übergabe des Krautes von derartigen Rodeeinrichtungen bietet gewisse Schwierigkeiten, da die Krautketten unterschiedliche Anschlußlängen aufweisen und vorgeschaltete Siebketten zwischen seitlichen Krautketten umlaufen.

Aufgabe der Erfindung ist es, einen mehrreihigen kurz gebauten Kartoffelroder zu schaffen, bei dem die Nachteile bekannter Kartoffelroder vermieden sind und eine vorteilhafte Separierung der Kartoffeln von dem Kraut mit geringerem technischen Aufwand möglich ist.

Diese Aufgabe wird bei einem mehrreihigen Kartoffelroder der angegebenen Gattung durch die kennzeichnen den Merkmale des Anspruchs 1 gelöst.

Bei einer bevorzugten Ausführungsform sind alle nebeneinander umlaufenden Krautketten jeweils um ein Umlenkrad geführt, die zusammen koaxial angeordnet sind.

Vorteilhafterweise können mehrere Krautketten nebeneinander liegen und der vorgenannte Zwischenraum im mittleren Bereich dieser Krautketten liegen.

Es kann aber auch nur eine breite Krautkette vorgesehen sein, in deren Breitabmessungen das (ein) Quertransportband (die Quertransporteinrichtung) endet, so daß die Kartoffeln innerhalb der Kettenbreite abgeworfen werden.

Anstelle von mehreren sich über die Breite einer Krautkette verteilenden Ketten können auch im mittleren Bereich Riemen endlos umlaufen.

Bei einer derartigen Ausbildung und Anordnung von großmaschigen Gitteröffnungsweiten ist es in einfacher Weise möglich, oberhalb des Untertrums die Kartoffeln auf die Quertransportbänder fallen zu lassen. Aufgrund des mittleren Zwischenraumes zwischen den beiden Quertransporteinrichtungen fallen nur die Kartoffeln durch das Untertrum der mittleren Krautketten in einen Behälter oder in einen oder mehreren Schwaden gesondert vom Kraut auf den Boden. Dadurch werden Kartoffeln und Kraut gut separiert und können geerntet werden.

Um die von den Querbändern im mittleren Zwischenraum auf den Boden oder den Behälter zulaufenden Kartoffeln nicht durch das umlaufende untere Trum des Krautbandes zu behindern oder zu beschädigen, ist der Zwischenraum zwischen den Kettenstäben dieses Krautbandes so groß wie möglich.

Um trotzdem ein Durchfallen des Krautes im Bereich dieser vergrößerten Maschenöffnungen zu verhindern, kann es bevorzugt sein, daß parallel zu den Ketten im Bereich der vergrößerten Gitteröffnungen unterhalb des Obertrums gesonderte Leitstäbe seitlich verschiebbar gelagert sind, so daß die Gitteröffnungen im oberen Trum derart verkleinert werden können, daß eine einwandfreie Trennung von Kraut und Kartoffeln möglich ist, andererseits aber beim unteren Trum des Krautbandes diese Gitteröffnungen so groß sind, daß die durch die Querbänder zum Ablegeplatz geführten Kartoffeln durchfallen können.

Bei einer weiteren bevorzugten Ausführungsform kann die Krautkette im Untertrum im Bereich der Quertransporteinrichtung jeweils eine Schleife bilden, durch welche noch Restkartoffeln auf die Quertransporteinrichtungen fallen.

Weitere Merkmale ergeben sich aus den Unteransprüchen.

Ausführungsbeispiele der Erfindung sind in den Zeichnungen dargestellt und werden im folgenden näher beschrieben. Es zeigen:

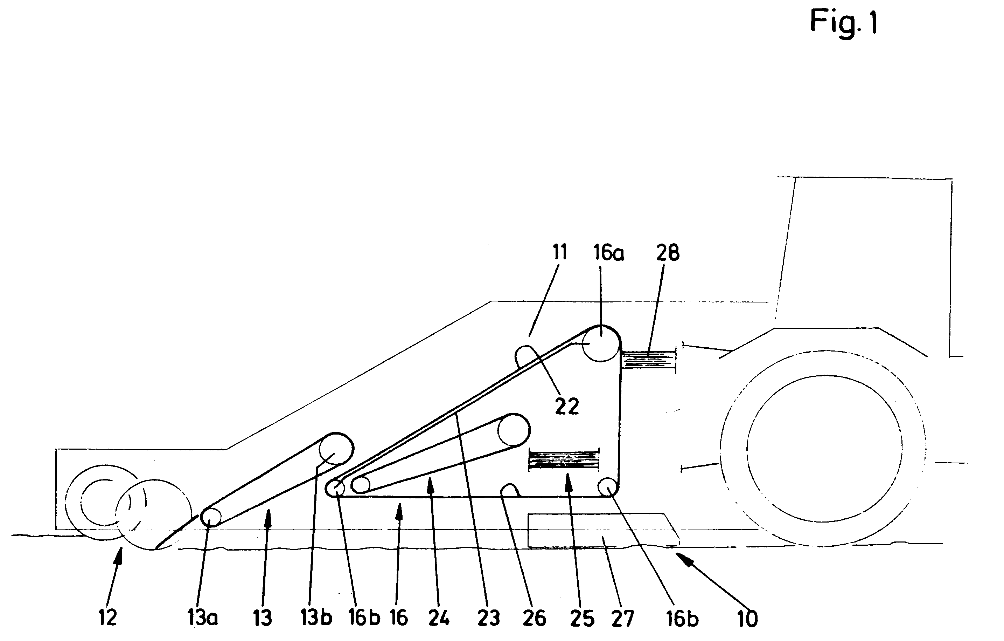

- Fig. 1: eine schematische Seitenansicht einer Kartoffelerntemaschine;

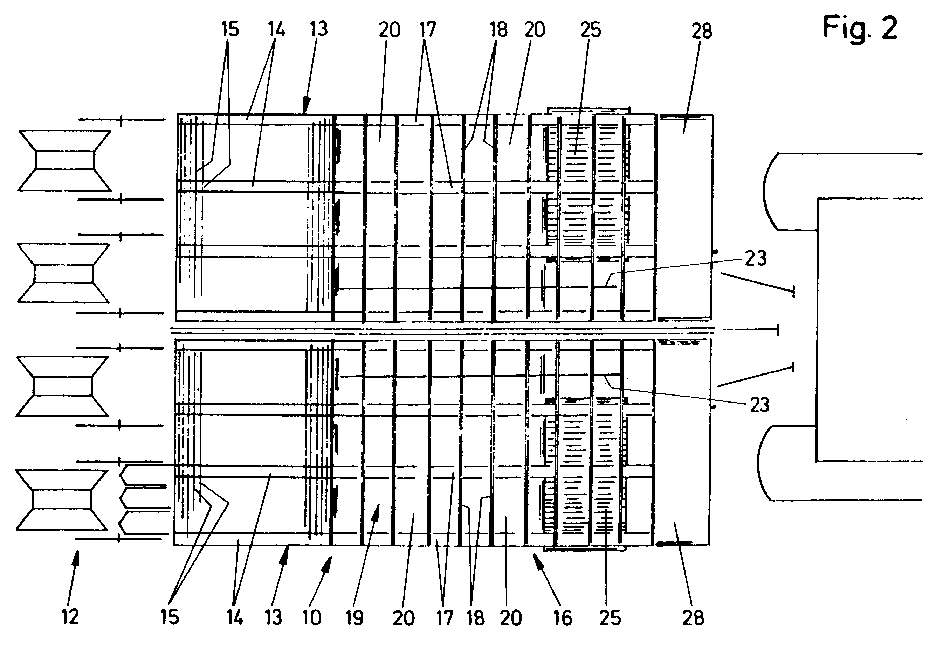

- Fig. 2: eine Draufsicht aufdieselbe Kartoffelerntemaschine;

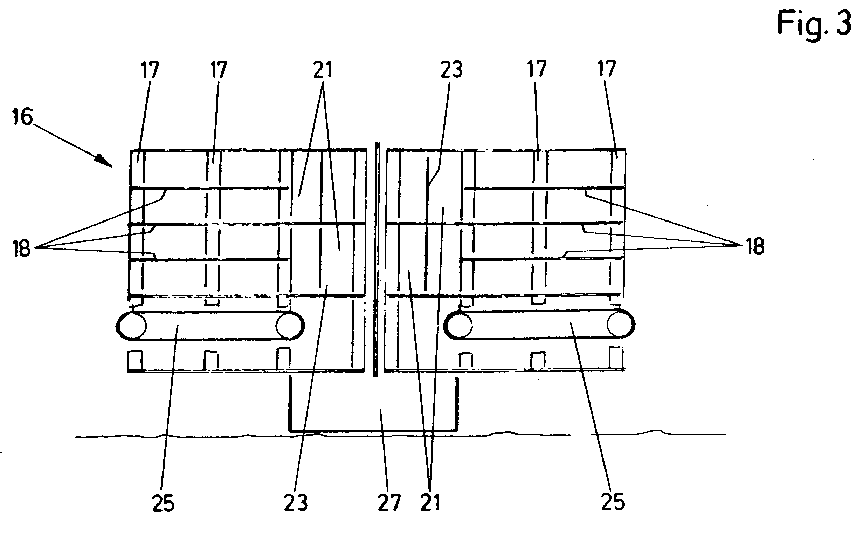

- Fig. 3: eine Rückansicht einer Kartoffeln und Kartoffelkraut fördernden Kettenbahn entsprechend Pfeil A;

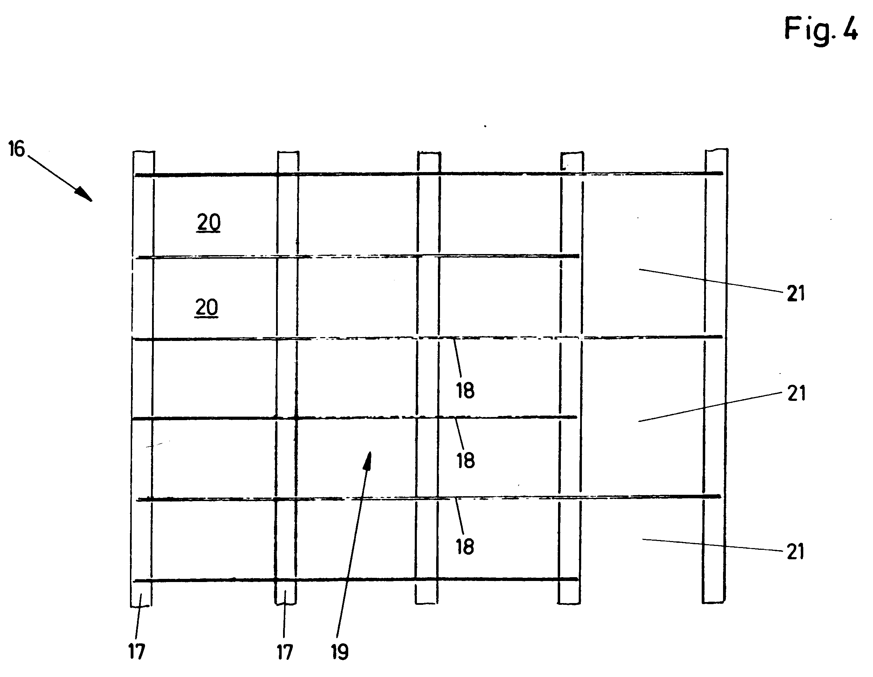

- Fig. 4: eine Draufsicht auf diese Transportkettenbahn;
- Fig. 5: eine Rückansicht mehrerer (erweiterter) Transportkettenbahnen;
- Fig. 6: eine schematische Seitenansicht einer abgeänderten Kettenbahn mit Schleife im Untertrum.

Eine mehrreihig ausgebildete Kartoffelerntemaschine (10) zeigt eine quer zur Fahrtrichtung angeordnete, zwischen zwei in Fahrtrichtung in einem Abstand zueinander verlaufenden Rahmengestellen (11) o. dgl. gelagerte Rodeeinrichtung (12) als Schubroder, mit der die Kartoffeln aus der Erde gehoben und anschließend das Kraut von den Kartoffeln getrennt werden. Daran schließt sich eine schräge Transportbahn an, auf der die Kartoffeln und das Kartoffelkraut voneinander etwas getrennt (nicht dargestellt) und durch die Vorschubbewegung der Kartoffelerntemaschine (10) auf eine der Rodeeinrichtung (12) entgegengesetzt der Fahrtrichtung nachgeschaltete Transporteinrichtung (13) sich bewegen. Diese Transporteinrichtung (13) ist kettenbandförmig ausgebildet und zeigt dazu mehrere, in einem Abstand zueinander angeordnete, in Fahrtrichtung verlaufende Siebketten (14) mit gewissen kleinen Abständen zueinander. Die Ketten (14) laufen jeweils um ein Antriebsrad (13 b) und ein Umlenkrad (13 a) endlos um, die koaxial jeweils auf einer gemeinsamen Welle bzw. Achse angeordnet sind. Quer zur Fahrtrichtung sind auf den Siebketten (14) in einem gewissen Abstande parallelzueinander Rundstäbe (15) o. dgl. befestigt. Die Transporteinrichtung (13) entspricht in ihrer Arbeitsbreite derjenigen der Rodeeinrichtung (12) und verläuft entgegengesetzt der Fahrtrichtung in etwa in einem spitzen Winkel zum Boden.

Die auf der Transporteinrichtung (13) voneinander getrennt liegenden Kartoffeln und das Kartoffelkraut werden durch die Transportbewegung der Transporteinrichtung (13) von anhaftender Erde befreit, die bedingt durch die siebartige Ausbildung der Transporteinrichtung (13) nach unten auf den Boden abfällt.

Dieser Transporteinrichtung (13) ist entgegen der Fahrtrichtung arbeitend eine zweite Transporteinrichtung als Kettenbahn (16) nachgeschaltet, die mit ihrer Auflagefläche (Obertrum) mit dem Transportband (13) in etwa in einem parallelen Abstand verläuft und im Querschnitt in etwa die Form eines rechtwinkligen Dreiecks aufweist. Auf dem oberen Trum (22) dieses "rechtwinkligen Dreiecks" liegen die Kartoffeln und das Kartoffelkraut.

Die Kettenbahn (16) hat mehrere parallel in einem gewissen Abstand zueinander verlaufende Ketten (17), an denen quer zur Fahrtrichtung ebenfalls parallel in einem Abstand zueinander Rundstäbe (18) befestigt sind. Es ergibt sich so ein Gitter (19), dessen Zwischenräume (20) groß genug sind, daß einerseits die Kartoffeln hindurchfallen können, andererseits aber das Kartoffelkraut auf dem Gitter (19) zurückgehalten wird.

Beiderseits einer gedachten in Fahrtrichtung verlaufenden Mittellinie der beiden dichtnebeneinanderliegenden Kettenbahnen ist jeweilseine in Fahrtrichtung verlaufende Reihe in der Gitterstruktur vergrößerter Zwischenräume (21) des Gitters (19) angeordnet, wobei diese Zwischenräume (21) größer sind als die anderen seitlichen Zwischenräume (20) der Kettenbahn (16).

Unterhalb des oberen Trums (22) ist ein sogenannter Leitstab (23), der beispielsweise am Rahmengestell (11) (nicht dargestellt) ortsfest aber seitlich verschiebbar gelagert ist. Die Kettenbahn (16) läuft etwa dreiecksförmig endlos, wobei ein führendes Rad als Antriebsrad (16 a) und zwei kleinere Räder (16 b) als Umlenkräder ausgebildet sind,die koaxial gelagert sind.

Innerhalb des dreieckförmigen Querschnitts der Kettenbahn (16) ist eine weitere Transporteinrichtung (24) als Kartoffelförderer sowie zwei in einem Abstand zueinander quer zur Fahrtrichtung und parallel zum Boden angeordnete Transporteinrichtungen (25) zum Abführen der Kartoffeln angeordnet. Diese zwei Quertransporteinrichtungen (25) zum Abführen der Kartoffeln erstrecken sich nicht über die gesamte Breite der Transporteinrichtung (16), sondern enden kurz vor den mittleren Zwischenräumen (21), so daß die Kartoffeln durch diese Zwischenräume (21) im unteren Trum (26) der Kettenbahn (16() in einen darunter hängenden Sammelbehälter (27) oder auf den Boden fallen.

Sobald die Kartoffeln und das Kartoffelkraut auf die Kettenbahn (16) gefördert worden sind, fallen die Kartoffeln durch die Zwischenräume (20) dieser Kettenbahn (16) auf den Kartoffelförderer (24), der unterhalb des oberen Trums (22) in einem Abstand zu diesem schräg verlaufend angeordnet ist. Dieser unterhalb des oberen Trums (22) angeordnete Kartoffelförderer (24) fördert die so durch die Zwischenräume (20) gefallenen Kartoffeln auf die beiden vorgenannten Quertransporteinrichtungen (25), von denen die Kartoffeln dann durch die Zwischenräume (21) des unteren Trums (26) in den darunter hängenden Sammelbehälter (27) o. dgl. fallen. Das noch auf der Kettenbahn (16) liegende Kartoffelkraut wird weiter gefördert, bis es senkrecht nach unten auf eine quer zur Fahrtrichtung nachgeschaltete Transporteinrichtung (28) fällt, von wo es einem anderen gesonderten Sammelbehälter o. dgl. (nicht dargestellt) zugeführt wird.

Durch den Leitstab (23) lassen sich die zur Mitte hin angeordneten Zwischenräume (21) im Bereich des oberen Trums (22) so aufteilen, daß das Kartoffelkraut nicht hindurchfallen kann, sondern wie in voran beschriebener Art und Weise der nachgeschalteten Transporteinrichtung (28) zugeführt wird. Die größeren Zwischenräume (21) werden dabei nur im Bereich des unteren Trums wirksam und sind dabei in ihrer Größe so dimensioniert, daß eine problemlose Ablage der Kartoffeln in den darunter sich befindlichen Sammelbehälter (27) o. dgl. gewährleistet ist.

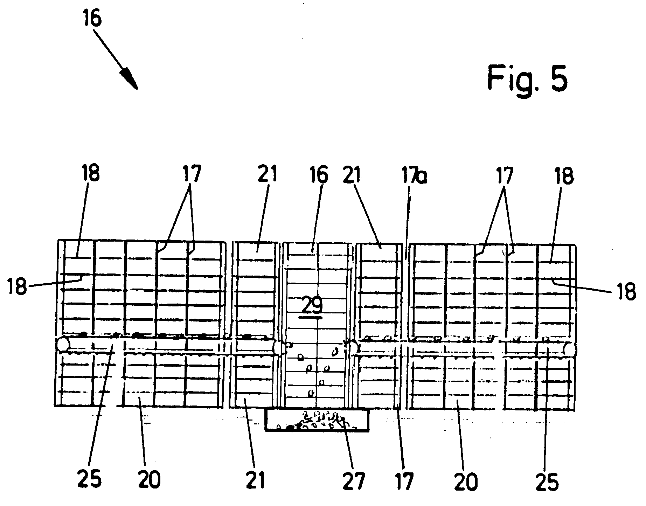

Bei dem in Fig. 5 dargestellten Ausführungsbeispiel sind zwei äußere übliche dreieckförmig endlos umlaufende Ketten (17) mit kleineren Gitterabständen angeordnet, die zwischen sich zwei mittlere Kettenbahnen (17 a) mit größeren Gitterabständen (21) aufnehmen, durch welche die Kartoffeln im Zwischenraum (29) zwischen den Querfördereinrichtungen (25) nach unten abfallen.

Um diesen Zwischenraum (29) läuft eine mittlere Kette (16) mit größeren Abständen der Gitter derart dreieckförmig um, daß ihr unteres Trum unterhalb des Zwischenraumes zwischen den Querfördereinrichtungen (25) umläuft, so daß die abfallenden Kartoffeln durch das Gitter des unteren Trums durchfallen, während noch vorhandenes Restkraut auf dem unteren Trum liegen bleibt und abgeführt wird.

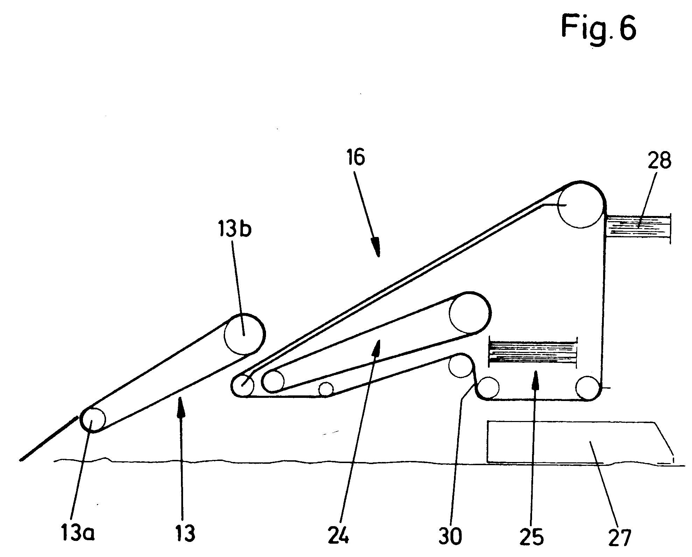

Fig. 6 zeigt eine abgeänderte Dreieckform der Krautketten (16), bei denen im unteren Kettentrum (26) im Bereich der Quertransporteinrichtungen (25) eine Z-förmige Schleife (30) ausgestaltet ist. Hierdurch lassen sich Restkartoffeln aus dem Untertrum (26) der Kettenbahn (16) noch entfernen.

Gemäß der Erfindung sind somit der mittlere Bereich aneinanderstoßender Kettenbahnen (16) großmaschiger ausgebildet.

## Patentansprüche

1. Mehrreihiger Kartoffelroder (10)
- mit einer Rodeeinrichtung (12) zum Roden von Kartoffeln;
- mit einer Transporteinrichtung (16) zum Fördern von Kartoffeln und Kartoffelkraut, wobei die Transporteinrichtung (16) eine Mehrzahl von beabstandeten Ketten (17) aufweist, die die in Transportrichtung seitliche Begrenzung eines Gitters (19) bilden, dessen Zwischenräume (20) das Hindurchtreten ausschließlich von Kartoffeln ermöglichen, und wobei die Transporteinrichtung (16) kontinuierlich in Dreieckform umläuft und dabei ein Obertrum (22) und ein Untertrum (26) bildet;
- mit zwei Quertransporteinrichtungen (25) zum Abführen von Kartoffeln, die zwischen dem Obertrum (22) und dem Untertrum (26) der Transporteinrichtung (16) angeordnet sind, wobei die Quertransporteinrichtungen (25) gegenüberliegende Abführbereiche aufweisen, die unmittelbar vor einem mittleren Gitterbereich enden, dessen Zwischenräume (21) seitlich von Ketten (17) begrenzt werden, die benachbart zu einer gedachten Mittellinie der Transporteinrichtung (16) angeordnet sind;
- mit einer Kartoffeltransporteinrichtung (24), die innerhalb des Dreieckbereiches der Transporteinrichtung (16) angeordnet ist;
- wobei die Kartoffeltransporteinrichtung (24) unterhalb der Zwischenräume (20) des Gitters (19) angeordnet ist und Kartoffeln, die durch die Zwischenräume (20) herabfallen, zu den Quertransporteinrichtungen (25) fördert dadurch gekennzeichnet,
- daß die Zwischenräume (21) des mittleren Gitterbereiches größer sind als die übrigen Zwischenräume (20)des Gitters (19) der Transporteinrichtung (16).

2. Mehrreihiger Kartoffelroder nach Anspruch 1, dadurch gekennzeichnet, daß alle nebeneinander umlaufenden Krautketten (17) jeweils um ein roderseitiges Umlenkrad (16b) geführt sind, die zusammen koaxial angeordnet sind, und daß die den mittleren Zwischenraum (29) umlaufende Krautkette (17) mit größeren Kettenabständen (21) als die Nachbarkrautketten (17) ausgestattet ist.

3. Kartoffelroder nach einem der Ansprüche 1 oder 2, dadurch gekennzeichnet, daß Krautketten (16) als Stabketten (15) ausgebildet sind, die im Bereich der mittleren unteren Abwurfstelle (27) einen größeren Abstand aufweisen als in den Randbereichen.

4. Kartoffelroder nach einem der Ansprüche 1 bis 3, dadurch gekennzeichnet, daß im Bereich der vergrößerten Abstände im Obertrum (22) der Krautkette (16) in Förderrichtung ein oder mehrere Leitstäbe (23) parallel zu den Krautketten (17) verlaufen, die seitlich bewegbar die Gitteröffnungsweite (21) verändern.

5. Kartoffelroder nach Ansprüch 4, dadurch gekennzeichnet, daß die Leitstäbe (23) seitlich verschiebbar gelagert sind.

6. Kartoffelroder nach einem der Ansprüche 1 bis 5, dadurch gekennzeichnet, daß die Krautketten(17) im Bereich der Quertransporteinrichtungen (25) im Untertrum (30) als Schleife geführt sind.

7. Kartoffelroder nach einem der Ansprüche 1 bis 6, dadurch gekennzeichnet, daß die Krautkette (17) Z-schleifenförmig geführt ist.

## Claims

1. A multi-row potato harvester (10)
- having a harvesting apparatus (12) for harvesting potatoes;
- having a transport device (16) for conveying potatoes and potato haulm, the transport devise (16) having a plurality of spaced chains (17), which form the lateral limit of a grid (19) in the direction of transport, the spaces (20) of which enable the exclusive passage of potatoes, and the transport device (16) continuously revolving in a triangular shape and forming an upper strand (22) and a lower strand (26);
- having two transverse transport devices (25) for carrying away potatoes, which are disposed between the upper strand (22) and the lower strand (26) of the transport device (16), the transverse transporting devices (25) also having mutually opposite delivery regions ending directly in front of a central grid region, the spaces of which (21) are laterally limited by chains (17) disposed adjacent to an imaginary centre line of the transport device (16);
- having a potato transport device (24) disposed inside the triangular region of the transport device (16),
- the potato transport device (24) also being disposed beneath the spaces (20) of the grid (19) and conveying potatoes falling through the spaces (20) to the transverse transport devices (25),
**characterised in that**
- the spaces (21) in the central grid region are larger than the remaining spaces (20) in the grid (19) of the transport device (16).

2. A multi-row potato harvester according to Claim 1, **characterised in that** all the haulm chains (17) revolving next to one another are guided around a deflection wheel on the harvesting side (16b), which are together disposed axially,
and in that the haulm chain (17) revolving around the central space (29) is provided with larger chain spaces (21) than the neighbouring haulm chains (17).

3. A potato harvester according to one of Claims 1 or 2, **characterised in that** haulm chains (16) are constructed as bar chains (15), which in the region of the central lower discharge point (27) have a larger spacing than in the edge regions.

4. A potato harvester according to one of Claims 1 to 3, **characterised in that** in the region of the enlarged spacings in the upper strand (22) of the haulm chain (16) in the direction of transport one or more guide bars (23) extend parallel to the haulm chains (17), which change the grid aperture width (21) in a laterally movable manner.

5. A potato harvester according to Claim 4,
**characterised in that** the guide bars (23) are mounted in a laterally displaceable manner.

6. A potato harvester according to one of Claims 1 to 5, characterised in that in the region of the transverse transport devices (25) the haulm chains (17) are guided as a loop in the lower strand (30).

7. A potato harvester according to one of Claims 1 to 6, characterised in that the haulm chain (17) is guided in a Z-shaped loop.

## Revendications

1. Récolteuse de pommes de terre à rangées multiples (10)
- avec un dispositif d'arrachage (12) pour l'arrachage de pommes de terre,
- avec un dispositif de transport (16) pour le transport de pommes de terre et de fanes de pommes de terre, le dispositif de transport (16) présentant une pluralité de chaînes (17) distantes entre elles qui constituent la délimitation latérale, dans le sens du transport, d'une grille (19) dont les intervalles (20) permettent le passage exclusivement de pommes de terre et le dispositif de transport (16) tournant en continu selon une forme triangulaire et établissant ainsi un brin supérieur (22) et un brin inférieur (26),
- avec deux dispositifs de transport transversaux (25) pour l'évacuation de pommes de terre, qui sont disposés entre le brin supérieur (22) et le brin inférieur (26) du dispositif de transport (16), les dispositifs de transport transversaux (25) présentant des zones d'évacuation opposées qui aboutissent directement devant une zone de grille centrale dont les intervalles (21) sont délimités latéralement par des chaînes (17) qui sont disposées adjacentes à une ligne médiane imaginaire du dispositif de transport (16),
- avec un dispositif de transport de pommes de terre (24) qui est disposé à l'intérieur de la zone triangulaire du dispositif de transport (16),
- le dispositif de transport de pommes de terre (24) étant disposé sous les intervalles (20) de la grille (19) et transportant les pommes de terre qui tombent à travers les intervalles (20) vers les dispositifs de transport transversaux (25),
caractérisée en ce que les intervalles (21) de la zone de grille centrale sont plus grands que les autres intervalles (20) de la grille (19) du dispositif de transport (16).

2. Récolteuse de pommes de terre à rangées multiples suivant la revendication 1, caractérisée en ce que toutes les chaînes à fanes (17) tournant l'une à côté de l'autre sont guidées, chacune, autour d'une poulie de renvoi (16b) côté récolteuse, lesquelles poulies sont, dans leur ensemble, disposées coaxialement, et que la chaîne à fanes (17) tournant autour de l'intervalle central (29) est pourvue d'écartements entre chaînes (21) plus grands que les chaînes à fanes (17) voisines.

3. Récolteuse de pommes de terre suivant l'une des revendications 1 ou 2, caractérisée en ce que les chaînes à fanes (16) sont agencées sous forme de chaînes à barres (15) qui, à l'endroit du point d'éjection inférieur central (27), présentent un écartement plus grand que dans les zones de bordure.

4. Récolteuse de pommes de terre suivant l'une des revendications 1 à 3, caractérisée en ce qu'à l'endroit des écartements agrandis dans le brin supérieur (22) de la chaîne à fanes (16) s'étendent, dans le sens du transport, une ou plusieurs barres de guidage (23), parallèlement aux chaînes à fanes (17) qui, en étant déplaçables latéralement, permettent de modifier la grandeur d'ouverture de grille (21).

5. Récolteuse de pommes de terre suivant la revendication 4, caractérisée en ce que les barres de guidage (23) sont montées mobiles latéralement.

6. Récolteuse de pommes de terre suivant l'une des revendications 1 à 5, caractérisée en ce que les chaînes à fanes 17 sont guidées, au niveau du brin inférieur (30), suivant un lacet, à l'endroit des dispositifs de transport transversaux (25).

7. Récolteuse de pommes de terre suivant l'une des revendications 1 à 6, caractérisée en ce que les chaînes à fanes (17) sont guidées suivant un lacet en Z.
